(19) Europäisches Patentamt
European Patent Office
Office européen des brevets

(11) Numéro de publication: **0 354 143**
**A1**

(12) **DEMANDE DE BREVET EUROPEEN**

(21) Numéro de dépôt: **89420285.2**

(22) Date de dépôt: **27.07.89**

(51) Int. Cl.5: **C 08 G 77/28**
C 08 G 77/392

(30) Priorité: **29.07.88 FR 8810532**

(43) Date de publication de la demande:
**07.02.90 Bulletin 90/06**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Canivenc, Edith**
**53, rue du Colombier**
**F-69007 Lyon (FR)**

**Cavezzan, Jacques Résidence du Parc Tête d'Or**
**4, Allée Marcel Achard**
**F-69100 Villeurbanne (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Diorganopolysiloxane à fonction thioalkylacrylate.**

(57) La présente invention concerne un diorganopolysiloxane linéaire ou cyclique à groupements thioalkylacrylate liés à la chaîne silicone par une liaison SiC et choisis parmi ceux de formules :

$$-(CH_2)_2 - S - Y - OC(O) - \overset{\displaystyle X}{\overset{|}{C}} = CH_2$$

et

$$-CH(CH_3) - S - Y - OC(O) - \overset{\displaystyle X}{\overset{|}{C}} = CH_2$$

X étant H ou méthyle.

Les diorganopolysiloxanes selon l'invention peuvent être préparés par addition radicalaire de mercaptoalcanol sur le diorganopolysiloxane vinylé correspondant suivi d'une transestérification au moyen d'un ester d'acide acrylique.

Les diorganopolysiloxanes selon l'invention sont réticulables sous U.V. ou sous un faisceau d'électrons et sont utilisables pour le gainage de fibres optiques.

EP 0 354 143 A1

**Description**

## DIORGANOPOLYSILOXANE A FONCTION THIOALKYLACRYLATE

La présente invention concerne un diorganopolysiloxane à fonction thioalkylacrylate lié à la chaîne polysiloxane par une liaison SiC, son procédé de préparation et son utilisation notamment pour le gainage de fibres optiques.

La demande en organopolysiloxane à fonction acrylate et/ou méthacrylate liée à la chaîne polysiloxane par une liaison SiC, s'accroît fortement car il présente des vitesses de réticulation plus rapides que les organopolysiloxanes vinylés disponibles dans le commerce. Ces organopolysiloxanes à fonction acrylate et/ou méthacrylate se présentent généralement sous forme d'huiles diorganopolysiloxanes et peuvent être formulées seuls ou en combinaison avec des monomères ou des polymères insaturés, pour être par la suite réticulés en général sous rayonnement UV. Ainsi le brevet américain US-A-3 577 264 décrit des liants de peinture formant une pellicule et réticulables sous radiation contenant de telles huiles. Le brevet américain US-A-4 035 355 décrit la réticulation en milieu anaérobie de ces huiles. Le brevet européen EP-A-016 663 décrit leur utilisation comme revêtement anti-adhérent. Dans le brevet britannique GB-A-949 126 on décrit des silanes hydrolysables, utilisés comme promoteurs d'adhérence de matériaux renforçateurs en fibre de verre, certains de ces silanes étant préparés par hydrosilylation d'allylméthacrylate.

Cependant il est bien connu par la littérature que la réaction d'hydrosilylation de composés à substituant allyle, en présence d'un catalyseur au platine peut engendrer des réactions secondaires indésirables avec notamment apparition de propène à moins que l'hydrure de silicium contienne des groupements donneurs d'electrons tels que des atome de chlore ou des groupements carbonyle. On peut se rapporter à ce sujet à SPEIER, J.L. et al., J AM CHEM SOC. 79 51957 (1974) ET RYAM, I.W. ET al. J AM CHEM. SOC., 82 3601 (1980) ainsi qu'aux brevets américains US-A-4 503 208 et US-A-3 767 690.

Les brevets américains US-A-4 011 247 et US-A-4 554 339 décrivent des diorganopolysiloxanes portant à la fois des motifs acryloxy et des motifs SiH.

Selon le brevet US-A-4 554 339 on estérifie des huiles gamma-hydroxypropylées en bout de chaîne par de l'acide acrylique en utilisant une terre acide du type montmorillonite. Ce procédé présente l'inconvénient de devoir séparer le catalyseur solide en fin de réaction.

Dans les brevets américains US-A-4 261 875 et US-A-4 294 974 on décrit un procédé de préparation d'huiles diorganopolysiloxanes à fonctionnalité acrylate et/ou méthacrylate pouvant présenter en outre des fonctions hydroxyalkyle par réaction de l'huile diorganopolysiloxane correspondante à fonction hydroxyalkyle sur le chlorure d'acryloyle ou de méthacryloyle en présence de triéthylamine et formation du chlorhydrate de l'amine correspondant. Le principal inconvénient de cette méthode est précisément l'élimination du chlorhydrate d'amine formé.

Un autre monomère également très utilisé est l'isocyanato-2 éthylméthacrylate (US-A-4 543 398 et US-a-4 600 751).

Cependant ce monomère est sensible à la présence d'eau et présente des risques de toxicité non négligeable.

Il est également possible d'obtenir des huiles à fonction acrylate ou méthacrylate par ouverture d'un groupe époxy (oxirane) au moyen d'acide acrylique en présence de catalyseurs les plus divers (US-A-4 293 678 et EP-A-269 114). On peut ainsi par exemple obtenir des diorganopolysiloxanes présentant des groupes de formule :

$\equiv Si\ (CH_2)_3\ OCH_2 - CH(OH)\ CH_2\ OC(O) - CH = CH_2$

Les huiles obtenues sont souvent très visqueuses du fait de la présence de groupes hydroxyle engendrant des liaisons hydrogène.

La réaction n'est pas complète. Il reste souvent des groupes époxy résiduels moins réactifs aux U.V. que les groupes acrylate. Ces huiles présentent en outre une médiocre stabilité au stockage.

Le brevet US-A-3 767 690 décrit la préparation de cinnamates organosiliciés par réaction de cinnamate d'allyle sur un silane ou siloxane à fonction mercapto. Les produits obtenus réticulent sous U.V. mais beaucoup plus lentement que les diorganopolysiloxanes porteurs de fonctions acrylate ou méthacrylate. Ce procédé ne peut être extrapolé à la préparation de diorganopolysiloxanes à fonction thioalkylacrylate car il met en oeuvre des générateurs de radicaux libres qui polymérisent les fonctions acrylates ou méthacrylates.

Par ailleurs, pour les applications très spécifiques comme le gainage des fibres optiques, on recherche des compositions silicones à indice de réfraction élevé (supérieur à 1,48) pour le revêtement primaire de la fibre optique et à fort module de Young (supérieur à 100 MPa) pour le revêtement secondaire de la fibre optique.

Ces compositions silicones doivent en outre être réticulables sous rayonnement gamma, U.V., faisceau d'électrons, etc ..... dans un temps d'irradiation inférieur à la seconde.

Or les diorganopolysiloxanes à fonction acrylate connus réticulent bien généralement en moins d'une seconde mais présentent un indice de réfraction généralement inférieur à 1,48 et un module de Young souvent inférieur à 100 MPa.

La présente invention a pour but de proposer un diorganopolysiloxane à fonction acrylate lié à la chaîne polysiloxane par une liaison SiC qui :

- soit aisé à préparer à partir de produits de départs disponibles,
- soit stable au stockage,

- soit réticulé sous rayonnement gamma, U.V., infra-rouge, faisceau d'électrons, en couche mince en moins d'une seconde,
- présente un indice de réfraction supérieur à 1,48,
- présente à l'état réticulé un module de Young supérieur à 100 MPa.

Ces buts et d'autres sont atteints par la présente invention qui concerne en effet un diorganopolysiloxane choisi parmi ceux de formule :

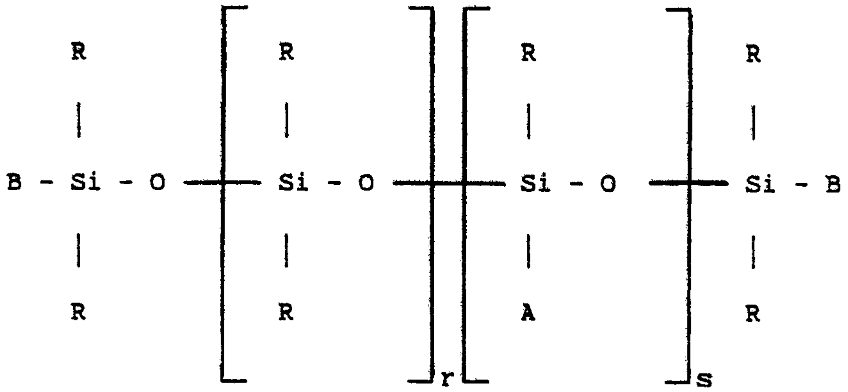

(1)

dans laquelle les symboles :
- R, identiques ou différents, sont choisis parmi les radicaux alkyle en $C_1$-$C_{10}$, vinyle, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est 0, au moins un des deux symboles B est A,

et de formule :

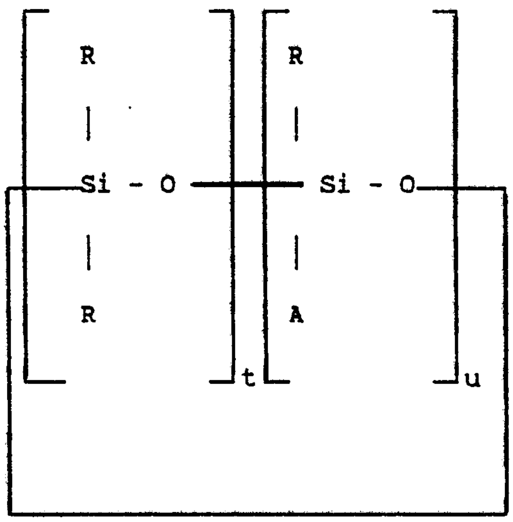

(2)

dans laquelle :
- R a la même signfication qu'à la formule (1),
- u est un nombre entier compris entre 1 et 20 et
- t est un nombre entier compris entre 0 et 20 inclus,
- t + u est égal ou supérieur à 3.

Formules dans lesquelles les symboles A, identiques ou différents, sont choisis parmi les radicaux de formules :

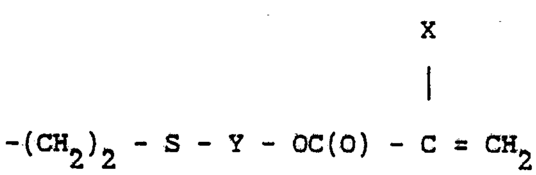

(3)

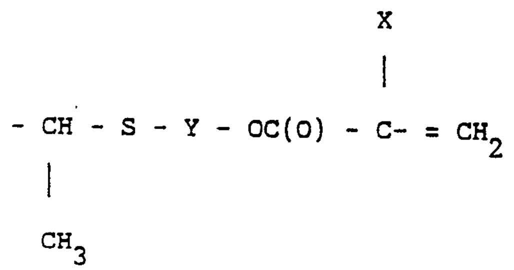

(4)

$$-(-CH_2)_2 - S - Y - OH \qquad (5)$$

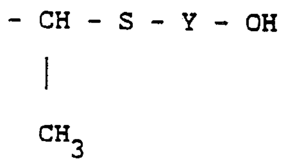

(6)

dans lesquelles X est choisi parmi l'atome d'hydrogène et le radical méthyle, au moins un des radicaux A répondant à la formule (3) ou (4), Y est un reste hydrocarboné aliphatique saturé divalent linéaire ou ramifié ayant de 2 à10, de préférence 2 à 4 atomes de carbone.

On préfère plus particulièrement les polymères statistiques ou à blocs de formule (1) et (2) présentant au moins l'une des caractéristiques suivantes :

- R est choisi parmi un radical méthyle, phényle et vinyle,
- r est compris entre 0 et 20 inclus,
- s est compris entre 2 et 15 inclus,
- t + u est compris entre 3 et 10,
- X est méthyle,
- Y est $-(CH_2)_2-$.

De préférence tous les radicaux A sont choisis parmi ceux de formules (3) et (4).

Selon un procédé préféré, les polymères de formules (1) et (2) peuvent être préparés de la façon suivante : au cours d'une première étape on fait réagir un diorganopolysiloxane choisi parmi ceux de formule :

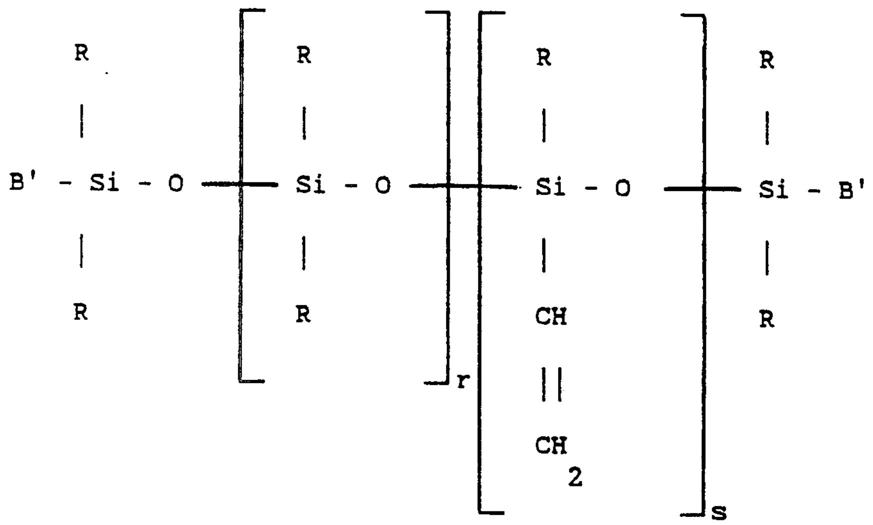

(7)

dans laquelle R, r et s ont la signification donnée ci-dessus pour la formule (1) et les radicaux B′, identiques ou différents, sont choisis parmi les radicaux R et le radical vinyle,
et de formule :

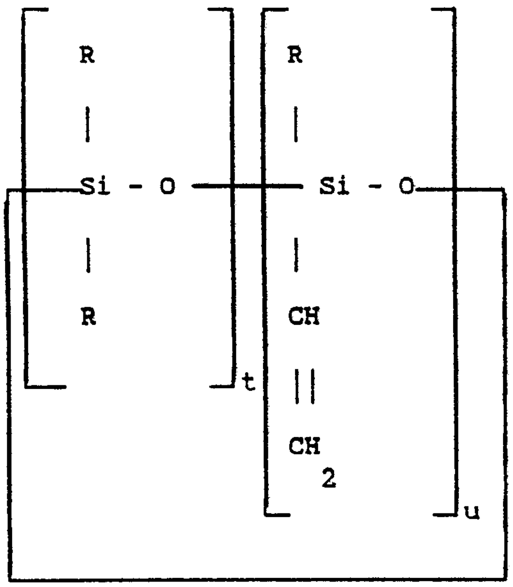

(8)

dans laquelle R, t et u ont la signification donnée pour la formule (2), sur un mercaptoalcanol de formule HSYOH, Y ayant la signification ci-dessus, en présence d'un générateur de radicaux libres et, au cours d'une deuxième étape, on fait réagir le polymère à fonction mercaptoalcanol obtenu sur un ester d'acide acrylique de formule :

X
|
$CH_2$ = C - C(O)OZ (9)

dans laquelle X est un atome d'hydrogène ou le radical méthyle et Z est un radical alkyle, en présence d'une quantité catalytiquement efficace d'un composé à l'étain.

La première étape fait intervenir une réaction d'addition radicalaire d'un mercaptoalcanol sur un composé vinyl organosilicié en présence d'un générateur de radicaux libres qui peut être avantageusement l'azobisisobutyronitrile.

Une telle réaction est connue, elle est par exemple décrite dans le brevet européen EP-A-0 299 390 cité comme référence.

Par cette réaction on obtient un polymère comportant principalement des groupes de formule (5) et éventuellement (6).

On peut faire réagir le mercaptoalcanol suivant un défaut molaire, un excès molaire ou en quantité équimolaire par rapport au nombre de moles de vinyle dans le polymère de formule (7) de départ.

L'utilisation d'un défaut molaire de mercaptoalcanol permet d'obtenir une huile de formule (1) ayant des radicaux vinyle résiduels dans la chaîne.

Comme mercaptoalcanol on peut en particulier utiliser le mercapto-2 éthanol, le mercapto-1 propanol-3 et le mercapto-3 butanol-2.

Dans le cas où l'on souhaite une réaction complète il est recommandé d'utiliser un excès molaire de mercaptoalcanol. On élimine l'excès de mercaptoalcanol par exemple par distillation sous pression réduite. La réaction d'addition a lieu de préférence à chaud (60 à 110 °C) pendant une durée de deux à plusieurs heures.

Au cours de cette réaction d'addition il est possible que la réaction d'addition se fasse en $\alpha$ ou en $\beta$ du silicium porteur du groupe vinyle et il apparaît alors, sur la chaîne diorganopolysiloxane, des groupes de formule (6) ci-dessus.

Les polymères de départ de formules (7) et (8) sont bien connus et sont décrits en détail dans le littérature. Ils sont en outre, pour la plupart, disponibles dans le commerce.

La réaction de transéstérification de la deuxième étape est décrite en détail dans la demande de brevet français 87/02 617, déposée le 24 février 1987 au nom de la demanderesse et citée comme référence.

Au cours de la réaction de transestérification, on élimine, de préférence en continu, l'alcool formé de formule ZOH par distillation azéotropique avec l'ester de formule (9).

Le catalyseur à l'étain peut être n'importe quel composé minéral et/ou organique de l'étain. On préfère toutefois utiliser les composés de l'étain de valence 4.

Sont plus particulièrement préférés les oxydes de dialkylétain dont les radicaux alkyle sont en $C_1$-$C_{18}$ inclusivement, tels que l'oxyde de di n-butylétain, l'oxyde de di n-octylétain, l'oxyde de di(éthyl-2 hexyl)étain et les produits de réaction de ces oxydes de dialkylétain sur des esters organiques tels que le maléate de diméthyle et le phtalate de diéthyle ou des silicates d'alkyle tels que le silicate de méthyle ou d'éthyle comme décrits en détail dans les brevets américains US-A-2 597 920 et US-A-3 839 246 et le brevet britannique GB-A-1 551 868.

Sont également utilisables tous les catalyseurs à l'étain utilisés comme catalyseurs de durcissement des compositions élastomères de silicones réticulant par réaction de polycondensation. Sont ainsi utilisables les

carboxylates d'étain tels que les dicarboxylates de dialkylétain en particulier le dilaurate de di n-butylétain ou de di n-octylétain, le diacétate de di n-octylétain ou de di n-butylétain (voir ouvrage de NOLL "CHEMISTRY AND TECHNOLOGY OF SILICONES" page 337 Academic Press, 1968, 2ème édition) ainsi que les diversatates de dialkylétain (US-A-3 678 002).

Sont également utilisables les produits de réaction des dicarboxylates de dialkylétain sur les silicates ou leurs produits d'hydrolyse partielle comme décrit dans le brevet français FR-A-1 343 138 et les brevets américains US-A-3 186 963 et US-A-3 862 919, ainsi que les chelates d'étain décrits dans le brevet américain US-A-3 055 845 et le brevet européen EP-A-147 323.

Le catalyseur à l'étain peut être introduit en même temps que les réactifs ou par petites portions au cours de la réaction.

La quantité utilisée de catalyseur peut varier considérablement, elle est généralement de 0,001 à 2 %, de préférence 0,01 à 0,5 %, en poids d'étain métal par rapport au poids de la masse réactionnelle.

La quantité d'ester de formule (9) est comprise, de préférence entre environ 1,1 et 5 moles d'ester (9) par équivalent de fonctions alcool contenues dans le polymère à fonction mercaptoalcanol. On peut toutefois utiliser un défaut d'ester ou effectuer une transestérification incomplète si l'on veut laisser des fonctions alcools libres.

Les réactions des deux étapes peuvent être effectuées en masse ou en milieu solvant organique tel que le xylène et le toluène.

Bien que la réaction de transestérification de la deuxième étape soit la réaction préférée, il est possible de condenser directement le polymère à fonction mercaptoalcanol sur l'acide acrylique {formule (9), Z = H} ou sur le chlorure de l'acide acrylique {formule (9), Z = Cl}.

Selon une variante, il est possible d'allonger la chaîne polysiloxane d'un diorganopolysiloxane de formules (1) ou (2) en effectuant sur ce diorganopolysiloxane une réaction de réarrangement ou de polymérisation en présence d'un catalyseur cationique tel que l'acide trifluoro méthane sulfonique et d'un diorganocyclopolysiloxane de formule :

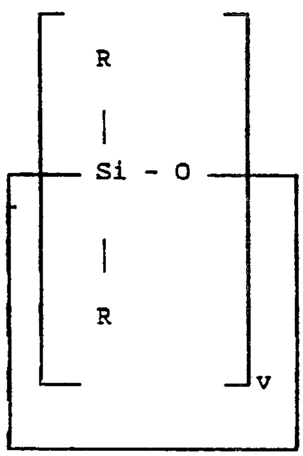

R ayant la même signification qu'à la formule (1) et v étant un nombre entier compris entre 3 et 10 inclus.

La réaction de polymérisation et/ou de réarrangement est arrêtée par addition d'une base telle que par exemple $Na_2CO_3$ ou $NaHCO_3$.

Les polymères de formules (1) et (2) réticulent à l'air ambiant ou sous atmosphère inerte en couches d'épaisseur de quelques µm à plusieurs millimètres d'épaisseur en moins d'une seconde, par exposition sous U.V., faisceau d'électrons, rayonnements gamma, infra-rouge, etc .....

Le revêtement obtenu est transparent, présente un indice de réfraction élevé supérieur à 1,48 et un module de Young supérieur à 100 MPa.

Les polymères de formule (1) peuvent comporter des additifs tels que :

- des photoiniateurs tels que l'acétophénone, la benzophènone, l'anthraquinone, la 4,4'diméthoxybenzophénone et l'hydroxy-2 méthyl-2 phényl-1 propanone-1,
- des initiateurs de polymérisation tels que les péroxydes organiques,
- des amines organiques,
- des inhibiteurs de polymérisation comme l'hydroquinone,
- des diluants réactifs tels que l'hexanediol acrylate, le tripropylèneglycol diacrylate et le triméthylolpropanetriacrylate.

Les polymères de formules (1) et (2) conviennent tout spécialement dans les compositions pour le gainage des fibres optiques en silice réticulables sous U.V. ou sous faisceau d'électrons.

Les polymères selon l'invention sont également utilisables pour déposer une pellicule réticulée d'élastomère sur des supports variés tels que le papier et le polyéthylène et pour réaliser des joints in-situ réticulables sous UV.

Les exemples suivants illustrent l'invention sans en limiter la portée. Dans ce qui suit ou ce qui précède les

pourcentages et parties sont en poids, sauf indications contraires.

EXEMPLE 1 :

Synthèse du tétraméthyl cyclotétrasiloxane à fonctionnalisation méthacrylate de formule :

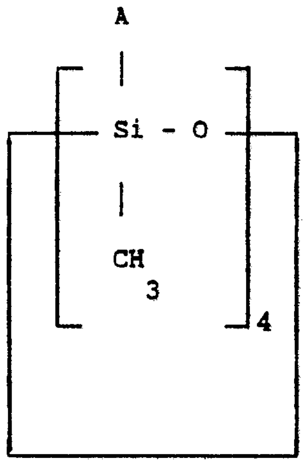

A étant principalement le groupe :
$-(CH_2)_2\ S\ (CH_2)_2 - OC(O) - C(CH_3) = CH_2$

1a : synthèse du produit de formule :

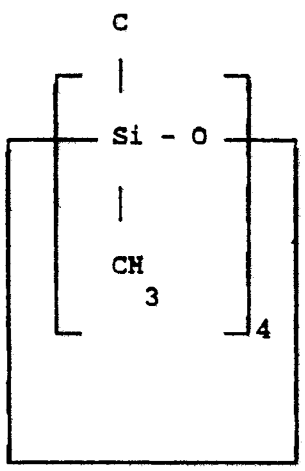

C étant principalement le groupe :
$-(CH_2)_2\ S\ (CH_2)OH$
à partir de $D_4$ vinylé de formule :

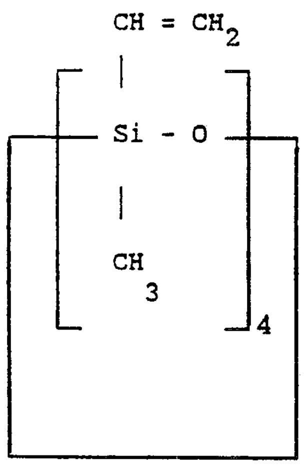

Dans un ballon tricol équipé d'un agitateur, chauffé par un bain d'huile thermostaté et sous courant d'azote, on charge 108,23 g de $D_4$ vinylé à 1 162,8 meq de fonction vinyle pour 100 g, et 200 mg d'ABIBN {azobisisobutyronitrile}.

La masse réactionnelle est portée à 95 °C sous agitation. 128,64 g de mercaptoalcanol sont introduits de manière à contrôler l'exothermicité de la réaction.

On note en cours de la coulée un virage du milieu réactionnel de l'incolore au jaune pâle, ainsi qu'une augmentation de viscosité. Au bout de 3 heures de réaction le taux de transformation des groupements vinyle est de 83,5 %.

Des quantités supplémentaires d'ABIBN, 100 mg et 60 mg sont additionnées successivement au milieu réactionnel pour obtenir un taux de transformation quantitatif des groupements vinyle au bout de 13 heures de réaction.

L'excès de mercaptoalcanol est éliminé à 130 °C sous 2 KPa.

Le résidu obtenu est une huile limpide incolore.

Une caractérisation en RMN$^1$H à 360 MHz (DMSO $d_6$) donne les enchaînements suivants :

$- \equiv Si - CH_2 - CH_2 - S(CH_2)_2 - OH$ 94,5 % molaire

$- \equiv Si - \underset{\displaystyle CH_3}{\underset{|}{CH}} - S(CH_2)_2 - OH$ 5,5 % molaire

Indice de réfraction : $\eta_d^{23°}$ : 1,5240

1 b : synthèse du tétraméthyl cyclotétrasiloxane à fonctionnalisation méthacrylate :

Dans un ballon tricol chauffé par un bain d'huile à 110 °C, muni d'une agitation centrale, d'un réfrigérant ascendant et balayé par un courant d'azote par bullage dans le milieu réactionnel, on charge 36,28 g du composé issu de l'exemple 1a, 0,638 g d'hydroquinone, 78,98 g de méthacrylate de méthyle (MAM).

Lorsque la température atteint 60 °C, 0,2423 g d'oxyde de dibutylétain est ajouté.

On effectue la réaction sous agitation pendant 24 heures.

En fin de réaction, on élimine le MAM en excès par distillation à 80 °C sous 1,33 KPa pendant 1 heure 30 minutes.

On obtient une huile limpide, jaune pâle où 96,8 % des fonctions alcool sont transformées en fonction ester méthacrylique pour former les enchaînements non différenciés en RMN$^1$H à 360 MHz :

$- \equiv Si(CH_2)_2 - S(CH_2)_2 - OC(O)\ C(CH_3) = CH_2$

$- \equiv Si\ \underset{\displaystyle CH_3}{\underset{|}{(CH)}} - S(CH_2)_2 - OC(O)\ C(CH_3) = CH_2$

Indice de réfraction : $\eta_d^{23°}$ : 1,5083.

1c : synthèse de tétraméthyl cyclotétrasiloxane à fonctionnalisation mixte :

On effectue les mêmes opérations qu'à l'exemple (1b) sauf que l'on charge simultanément 46,88 g du composé issu de l'exemple (1a), 0,5036 g d'hydroquinone, 100,40 g de méthacrylate de méthyle et 0,3095 g d'oxyde de dibutylétain.

Au bout de 23 heures de réaction à 110 °C et après élimination du méthacrylate de méthyle en excès, une

caractérisation RMN$^1$H du résidu huileux donne les enchaînements :

```
- ≡ Si - CH2 - CH2 - S(CH2)2 - OH          )
                                           ) 22,1 % molaire
- ≡ Si - CH - S(CH2)2 - OH                 )
         |
         CH3
```

```
- ≡ Si(CH2)2 -S(CH2)2 - OC(O) C(CH3) = CH2   )
                                             ) 77,9 % molaire
- ≡ Si(CH) - S(CH2)2 - OC(O) C(CH3) = CH2    )
        |
        CH3
```

<u>- EXEMPLE 2 :</u>

2a : synthèse du disiloxane de formule :

```
    CH3      CH3
    |        |
C - Si - O - Si - C
    |        |
    CH3      CH3
```

C ayant la signification donnée à l'exemple 1 à partir de $M_2$ vinylé de formule :

```
                CH3      CH3
                |        |
H2C = CH - Si - O - Si - CH = CH2
                |        |
                CH3      CH3
```

On effectue exactement les mêmes opérations qu'à l'exemple (1a) sauf que l'on utilise 111,76 g de $M_2$ vinylé, 121,80 g de mercaptoalcanol, 0,5019 g d'ABIBN chargés en cinq fractions échelonnées dans le temps de réaction.

Au bout de 18 heures de réaction le taux de transformation des groupements vinyle est quantitatif.

Après élimination du mercaptoalcanol en excès, une caractérisation RMN$^1$H du résidu huileux, de coloration jaune or donne les enchaînements suivants :

$- \equiv Si - CH_2 - CH_2 - S(CH_2)_2 - OH$ 93,4 % molaire

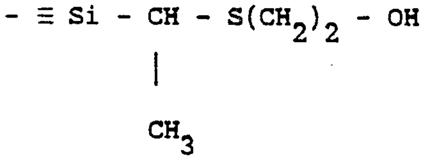 6,6 % molaire

Indice de réfraction : $\eta_d^{23°}$ : 1,5024

2b : synthèse du disiloxane de formule :

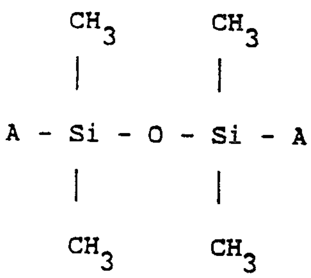

A ayant la signification donnée à l'exemple 1.

On effectue exactement les mêmes opérations qu'à l'exemple (1b) sauf que l'on utilise 58,68 g du composé issu de l'exemple (2a), 121,05 g de méthacrylate de méthyle, 0,9585 g d'hydroquinone et 0,3761 g d'oxyde de dibutylétain.

Au bout de 23 heures de réaction et après élimination du méthacrylate de méthyle en excès on obtient une huile limpide, jaune or où la totalité des fonctions alcools sont estérifiées en ester méthacrylique. Indice de réfraction : $\eta_d^{23°}$ : 1,4928.

- EXEMPLE 3 :

Synthèse d'un diméthylpolysiloxane de formule moyenne :

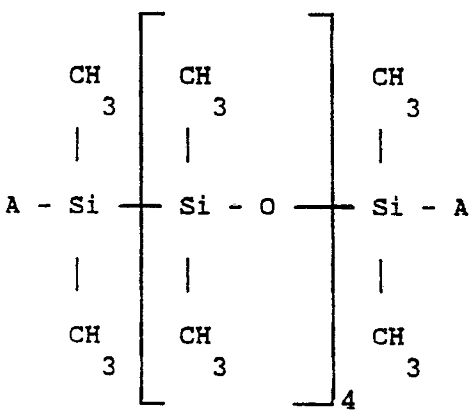

A ayant la signification donnée à l'exemple 1.

10,03 g de produit préparé à l'exemple (2b) et 85,30 g d'octaméthylcyclotétrasiloxane sont chargés dans un ballon tricol équipé avec agitation mécanique et sous courant d'azote.

Lorsque la température 60 °C est atteinte par chauffage du milieu réactionnel, 56 µl d'acide triflique (trifluorométhane sulfonique) sont ajoutés.

Après 30 heures de chauffage à 60 °C, le fluide est neutralisé avec $Na_2CO_3$.

Après filtration, les cycliques de bas poids moléculaire sont éliminés par chauffage à 110 °C sous 0,8 KPa pendant 1 heure à l'évaporateur rotatif.

Le produit obtenu est une fluide clair incolore.

Une caractérisation RMN$^{29}$Si met en évidence la formation d'un copolymère à fonctionnalité α-ω-méthacrylate comprenant en moyenne, par molécule, quatre motifs diméthysiloxy D.

Une masse moléculaire en poids ($\overline{M\omega}$) de l'ordre de 1 600 et une masse moléculaire en nombre ($\overline{Mn}$) de

1 400 en équivalent polystyrène pour le copolymère obtenu, sont déterminées par chromatographie par perméation de gel et par analyse spectrale UV.

- EXEMPLE 4 :

Synthèse d'un diméthylpolysiloxane de formule moyenne :

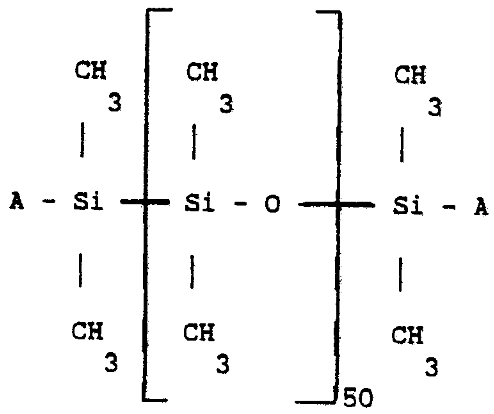

A ayant la signification donnée à l'exemple 1.

10,5 g de $D_4$ (Me) sont portés à 60 °C dans un ballon tricol équipé avec agitation mécanique et sous courant d'azote.

Lorsque la température est atteinte, 6,74 µl d'acide triflique sont ajoutés.

Après 8 minutes de réaction, 1 g de produit obtenu à l'exemple (2b) est chargé.

Après 24 heures de chauffage à 60 °C, et après neutralisation avec $Na_2CO_3$, le milieu réactionnel fluide, claire, incolore est caractérisé en chromatographie par perméation de gel.

La masse moléculaire en poids ($\overline{Mw}$) du copolymère obtenu est de : 5 900.

La masse moléculaire en nombre ($\overline{Mn}$) est de 2 400.

- EXEMPLE 5 : Réticulation sous UV :

Mode opératoire : on enduit une pellicule (film) de polyéthylène suivant des épaisseurs variables, d'une composition $C_n$ à base d'un polymère selon l'invention comportant 3 % en poids d'un photoinitiateur qui est l'hydroxy-2 méthyl-2 phényl-1 propanone-1.

On fait défiler à l'air le fil enduit à une vitesse de 4,8 m/mn, ce qui correspond à une exposition de 0,27 seconde et à une énergie de 17 mJ/cm².

La lampe UV utilisée est une lampe à mercure PHILIPS®, référence HOK6 munie d'un réflecteur élliptique de puissance 80 W/cm. La couche réticulée obtenue est toujours transparente.

On réticule une composition $C_1$ comportant le polymère obtenu à l'exemple (1c) ci-dessus. On obtient une couche réticulée présentant un module d'Young de 150 MPa.

On réticule une composition $C_2$ comportant le polymère obtenu à l'exemple (1c) contenant en outre 20 % en poids de tripolylène glycol diacrylate.

On obtient une couche réticulée présentant un module d'Young de 230 MPa.

- EXEMPLE 6 :

On reprend le mode opératoire de l'exemple 5 sauf que :

On utilise une composition $C_3$ à base du polymère obtenu à l'exemple (1b), et on détermine l'épaisseur maximum de la couche de composition réticulée que l'on peut obtenir après exposition UV de 0,5 seconde.

Cette épaisseur maximum est de 2,35 mm.

**Revendications**

1. - Diorganopolysiloxane à fonction thioalkylacrylate choisis parmi ceux de formule

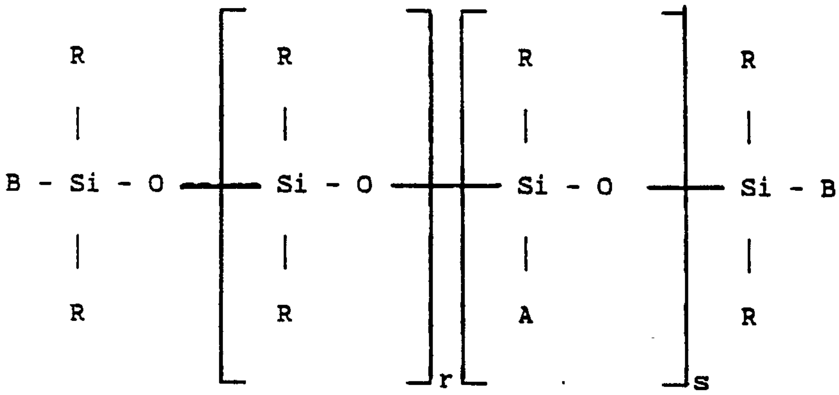

(1)

dans laquelle des symboles :
- R, identiques ou différents, sont choisis parmi les radicaux alkyle en $C_1$-$C_{10}$, vinyle, phényle et trifluoro-3,3,3 propyle, au moins 80 % en nombre des radicaux R étant méthyle,
- B, identiques ou différents, sont choisis parmi les radicaux R et le radical A,
- r est un nombre entier choisi entre 0 et 200 inclusivement,
- s est un nombre entier choisi entre 0 et 50 inclusivement et si s est 0, au moins un des deux symboles B est A,

et de formule :

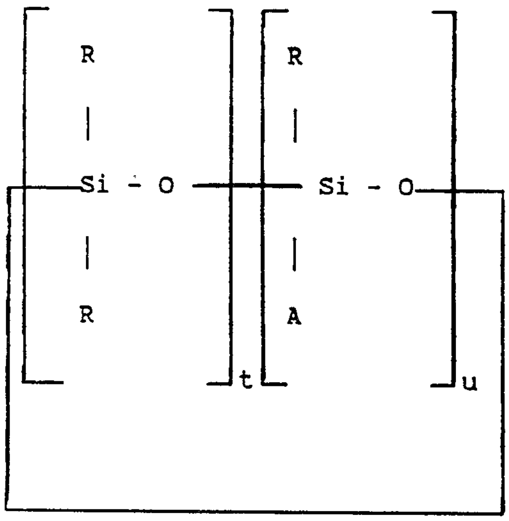

(2)

dans laquelle :
- R a la même signfication qu'à la formule (1),
- u est un nombre entier compris entre 1 et 20 et
- t est un nombre entier compris entre 0 et 20 inclus,
- t + u est égal ou supérieur à 3.

Formules dans lesquelles le symbole A est un radical de formule :

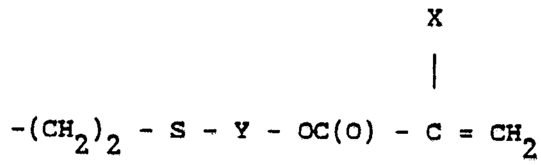 (3)

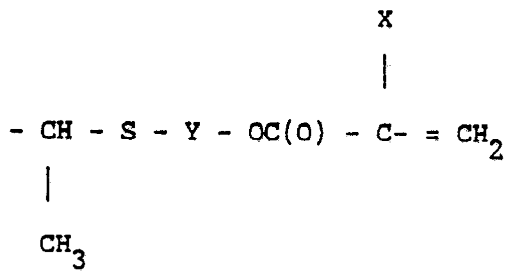 (4)

$-(-CH_2)_2 - S - Y - OH$ (5)

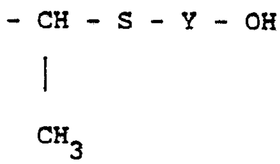 (6)

dans lesquelles X est choisi parmi l'atome d'hydrogène et le radical méthyle, au moins un des radicaux A répondant à la formule (3) ou (4) et Y est un reste hydrocarboné aliphatique saturé divalent linéaire ou ramifié ayant de 2 à 10 atomes de carbone.

2. - Diorganopolysiloxane selon la revendication 1, caractérisé en ce que tous les radicaux A sont choisis parmi ceux de formules (3) et (4).

3. - Diorganopolysiloxane selon la revendication 1 ou 2, caractérisé en ce que
- R est choisi parmi un radical méthyle, phényle et vinyle,
- r est compris entre 0 et 20 inclus,
- s est compris entre 2 et 15 inclus,
- t + u est compris entre 3 et 10,
- X est méthyle.
- Y est $-(CH_2)_2-$.

4. - Procédé de préparation d'un diorganopolysiloxane tel que défini à l'une quelconque des revendications 1 à 3, caractérisé en ce que :
au cours d'une première étape on fait réagir un diorganopolysiloxane choisi parmi ceux de formule :

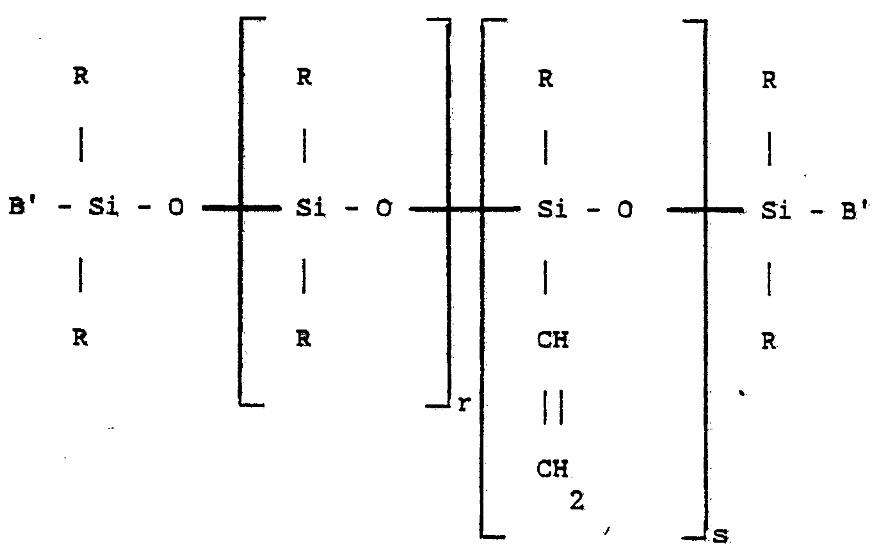 (7)

dans laquelle R, r et s ont la signification donnée ci-dessus pour la formule (1) et les radicaux B′, identiques ou différents, sont choisis parmi les radicaux R et le radical vinyle,
et de formule :

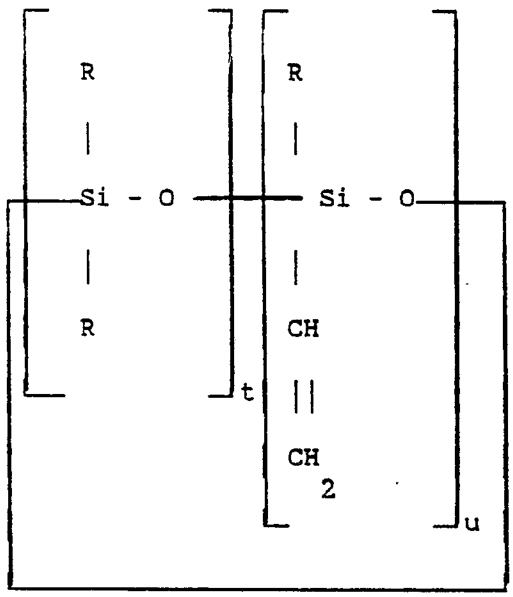

(8)

dans laquelle R, t et u ont la signification donnée pour la formule (2), sur du mercaptoalcanol de formule HSYOH, Y ayant la signification donnée ci-dessus, en présence d'un générateur de radicaux libres et, au cours d'une deuxième étape, on fait réagir le polymère à fonction mercaptoalcanol obtenu sur un ester d'acide acrylique de formule :

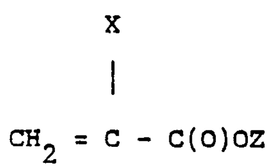

(9)

dans laquelle X est un atome d'hydrogène ou le radical méthyle et Z est un radical alkyle, en présence d'une quantité catalytiquement efficace d'un composé à l'étain.

5. - Composition pour le gainage de fibres optiques en silice réticulables sous UV ou sous faisceau d'électrons, caractérisée en ce qu'elle comporte un diorganopolysiloxane tel que défini à l'une quelconque des revendications 1 à 3.

Office européen des brevets

# RAPPORT DE RECHERCHE EUROPEENNE

Numero de la demande

EP 89 42 0285

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 402 317 (WACKER)<br>* Revendications 1,2 *<br>--- | 1 | C 08 G 77/28<br>C 08 G 77/392 |
| A,D | FR-A-2 160 896 (DOW CORNING)<br>* Revendication 1 *<br>--- | 1 | |
| A | FR-A-2 611 730 (RHONE-POULENC)<br>* Revendications 1,3 *<br>--- | 1 | |
| A | GB-A-2 057 476 (SHIN-ETSU)<br>* Revendication 1 *<br>--- | 1 | |
| A | BE-A- 650 882 (BAYER)<br>* Résumés 1,2 *<br>----- | 1 | |
| | | | **DOMAINES TECHNIQUES RECHERCHES (Int. Cl.5)** |
| | | | C 08 G |

Le présent rapport a été établi pour toutes les revendications

| Lieu de la recherche | Date d'achèvement de la recherche | Examinateur |
|---|---|---|
| LA HAYE | 09-11-1989 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)